# EUROPÄISCHE PATENTSCHRIFT

(11) **EP 0 640 470 B1**
(45) Veröffentlichungstag und Bekanntmachung des Hinweises auf die Patenterteilung: **28.04.1999**
(21) Anmeldenummer: 94113087.4
(22) Anmeldetag: 22.08.1994
(51) Int. Cl.: B29D 30/06, B29C 35/08

(54) **Verfahren zur Herstellung von Fahrzeugluftreifen unter Einsatz von Mikrowellenenergie**
Process for manufacturing pneumatic tyres using microwave energy
Procédé de fabrication de bandages pneumatiques utilisant de l'énergie à micro-ondes

(30) Priorität: 30.08.1993 DE 4329145
(43) Veröffentlichungstag der Anmeldung: 01.03.1995
(73) Patentinhaber: SP REIFENWERKE GMBH, 63450 Hanau (DE)
(72) Erfinder: Unseld, Klaus, Dr., D-63456 Hanau / Main (DE); Gerresheim, Manfred, Dr., D-63179 Obertshausen (DE)
(74) Vertreter: Finsterwald, Manfred, Dipl.-Ing., Dipl.-Wirtsch.-Ing.

(56) Entgegenhaltungen:
- EP-A- 0 571 802
- EP-A- 0 620 130
- FR-A- 2 016 679
- FR-A- 2 562 833
- FR-A- 2 669 557
- GB-A- 759 001
- US-A- 3 788 785
- US-A- 4 208 562
- DATABASE WPI Week 8741, Derwent Publications Ltd., London, GB; AN 87-287361 & JP-A-62 199 504 (YOKOHAMA RUBBER K. K.) 3. September 1987
- DATABASE WPI Week 9225, Derwent Publications Ltd., London, GB; AN 92-204443 & JP-A-4 133 807 (TOYO RUBBER IND.) 7. Mai 1992

## Beschreibung

Die Erfindung betrifft ein Verfahren zur Herstellung von Fahrzeugluftreifen mit sich zwischen zwei Wulstringen erstreckender Karkasse und einem zwischen Karkasse und Lauffläche angeordneten Gürtel, bei welchem im Verlauf der unter Einwirkung von Wärme und Druck erfolgenden Vulkanisation und Formgebung zumindest ein Teil der erforderlichen Wärmeenergie in Form von Mikrowellenenergie in den in einer Preßform angeordneten Reifen eingebracht wird.

Fahrzeugluftreifen werden üblicherweise unter Verwendung von Wulstringen aus Stahlcord und zumindest im Falle von Radiallagenreifen unter Verwendung von metallischen Breaker-Einlagen gefertigt.

Im Zusammenhang mit dem Runderneuern von Fahrzeugreifen ist es auch bereits bekannt, zwischen einem bereits vulkansierten Laufkranz und der Karkasse eine unvulkanisierte Schicht aus Verbindungsgummi vorzusehen, diese Verbindungsschicht mittels Mikrowellenenergie zu vulkanisieren und damit den Laufflächenstreifen mit dem Reifen dauerhaft zu verbinden.

Versucht wurde auch bereits, bei der Herstellung von Vollgummireifen Mikrowellenenergie einzusetzen, um Prozeßzeiten zu verringern.

Ein Verfahren der eingangs genannten Art ist aus der GB-A-07 59 001 bekannt. Bei diesem bekannten Verfahren wird die zur Vulkanisation erforderliche Wärmeenergie zwar bereits im wesentlichen durch Mikrowellenenergie eingebracht. Die Mikrowellenenergie wird jedoch in alle Reifenbereiche gleichmäßig eingebracht, wodurch aufgrund der Reifenstruktur unterschiedliche Erwärmungen und lokale Überhitzungen auftreten können. Starke Überhitzungen können insbesondere in Reifenbereichen mit metallischen Bestandteilen auftreten.

Die FR-A-25 62 833 zeigt eine Vorrichtung zur Vulkanisation von Fahrzeugreifen, bei welcher die Mikrowellenenergie zentral in die als Mikrowellengefäß ausgebildete Heizform eingeleitet wird. Der Wellenleiter ist hierbei mehrteilig ausgebildet, um senkrecht zur Querschnittsebene des Reifens bewegt werden zu können.

Die US-A-42 08 562 zeigt ebenfalls eine Vorrichtung zur Vulkanisation von Fahrzeugluftreifen, bei welcher Mikrowellenenergie zentral in die als Mikrowellengefäß ausgebildete Reifenheizform eingebracht wird. Die Mikrowellenenergie wird über einen Radiator eingebracht, welcher zur Vergleichmäßigung des Energiefeldes rotiert.

Die FR-A-20 16 679 beschreibt ein Verfahren zur Vorheizung eines Fahrzeugluftreifens in einem hierfür vorgesehenen speziellen Mikrowellengefäß. Nach der Vorheizung wird der Reifen in eine Reifenheizform gebracht, wo er ausvulkanisiert wird und seine endgültige Form erhält.

Die US-A-37 88 785 betrifft ebenfalls ein Verfahren zur Vorheizung eines Fahrzeugluftreifens. Der Reifen wird hierbei in eine Reifenheizpresse und die Reifenheizpresse in eine Kammer gebracht, welcher Mikrowellenenergie zugeführt wird. Die Kammer ist durch Trennwände in verschiedene Zonen aufgeteilt, um verschiedene Reifenbereiche unterschiedlich vorzuheizen.

Die JP-A-41 33 807 und die JP-A-621 99 504 beinhalten Reifen aus nichtmetallischen Materialien.

Der Erfindung liegt die Aufgabe zugrunde, ein Verfahren der vorgenannten Art anzugeben, welches eine gleichmäßigere Erwärmung des Reifenrohlings und dadurch eine bessere Vulkanisation ermöglicht.

Diese Aufgabe wird dadurch gelöst, daß der Reifenrohling unter ausschließlicher Verwendung von nichtmetallischen Bestandteilen aufgebaut wird, und daß die Preßform aus unterschiedliche Mikrowellenabsorption und/oder Mikrowellendurchlässigkeit aufweisendem Material besteht, wobei die unterschiedlichen Materialbereiche der Preßform hinsichtlich des Aufbaus unterschiedlichen Reifenbereichen zugeordnet sind.

Durch die ausschließliche Verwendung von nichtmetallischen Bestandteilen werden durch Metallbestandteile hervorgerufene lokale Überhitzungen vermieden. Zusätzlich können durch das erfindungsgemäße Verfahren einzelne Reifenbereiche gezielt mit einer gewünschten Menge Mikrowellenenergie beaufschlagt werden. Hierdurch wird die Erwärmung des Reifenrohlings vergleichmäßigt und die Vulkanisation insgesamt verbessert.

Durch die Vermeidung metallischer Bestandteile ergibt sich außerdem nicht nur eine wesentliche Gewichtsersparnis, sondern es wird vor allem die Voraussetzung dafür geschaffen, daß bei einem Fahrzeugluftreifen im Verlauf des Vorgangs des Vulkanisierens des Reifenrohlings Mikrowellenenergie eingesetzt werden kann, wodurch die Gesamt-

Heizungszeit wesentlich verringert und im Optimalfall erreicht wird, daß die Heizzeit im wesentlichen der Aufbauzeit des Reifens entspricht. Dies hat dann wiederum zur Folge, daß die Anzahl der pro Form gefertigten Reifen wesentlich erhöht wird bzw. erhöht werden kann bzw. für eine bestimmte Produktionsmenge weniger Formen erforderlich sind und damit auch eine Platzersparnis im jeweiligen Fertigungsbetrieb erzielt wird.

Durch den Einsatz von Mikrowellenenergie und die damit bewirkte Reaktion zwischen Gummimischung und den sonstigen nichtmetallischen Reifenbestandteilen lassen sich besonders vorteilhafte Bindungsverhältnisse erreichen.

In einer ersten und besonders einfach zu realisierenden Ausführungsform des Verfahrens nach der Erfindung wird die Erwärmung des Reifenrohlings durch Mikrowellenenergie auf eine Anfangsphase beschränkt, die Mikrowellenerwärmung vor dem Einsetzen der Vulkanisationsreaktion abgebrochen und dann der vorerwärmte Rohling in eine herkömmliche Preßform eingebracht, in der das Ausvulkanisieren sowie die Profilierung unter Druck und zusätzlicher Wärmezufuhr erfolgt.

Bereits diese Grundausführung des erfindungsgemäßen Verfahrens führt im Zusammenhang mit metallfrei aufgebauten Reifenrohlingen zu wesentlichen Fertigungsvorteilen, insbesondere auch hinsichtlich der erzielbaren Zeitersparnis.

Die Beaufschlagung des Reifenrohlings mit Mikrowellenenergie in der Preßform hat den Vorteil, daß der Reifenrohling unmittelbar in diese Preßform eingebracht werden kann und dabei erreicht wird, daß der Rohling durch die Mikrowellenenergie einerseits in seinem Gesamtvolumen schneller auf erhöhte Temperatur gebracht wird, andererseits aber auch von den Außenseiten her über die sich erhitzende Preßform Energie eingebracht wird.

Die Verwendung einer solchen Preßform ist auch dann vorteilhaft, wenn eine Vorerwärmung des Reifenrohlings durch Mikrowellenenergie erfolgt, da im Zuge der Überführung des Rohlings von der Vorerwärmungsstation in die Preßform im Bereich der Außenwandungen auftretende Wärmeverluste auf diese Weise besonders schnell und wirksam ausgeglichen werden können.

Als Preßform wird vorzugsweise eine Form aus Kunststoffmaterial verwendet.

Die hinsichtlich Absorptions- und / oder Durchlässigkeitsverhalten unterschiedlichen Preßformbereiche können zweckmäßigerweise dadurch realisiert werden, daß auf diese Preßform eine oder mehrere dünne Schichten aufgebracht werden, die auf die Wellenlänge der verwendeten Mikrowellenenergie abgestimmt sind und Reflexions- oder Absorptionsverhalten der Form bewirken.

Die Leistung und / oder die Wellenlänge der Mikrowellenenergie kann während ihrer Zufuhr zum Reifen zumindest zeitweise variiert und vorzugsweise auch zeitweise unterbrochen werden, so daß aufgrund dieser sich unmittelbar auf den Reifen auswirkenden Maßnahmen optimale Vulkanisierbedingungen, insbesondere auch hinsichtlich der Verbin dung mit den nichtmetallischen Reifenbestandteilen, geschaffen werden können.

In Abhängigkeit von den verwendeten Reifenbestandteilen ist es auch möglich, während der Mikrowellenheizung gleichzeitig Mikrowellen unterschiedlicher Frequenz während vorgebbarer Zeitspannen wirksam werden zu lassen, was sich auf die wechselseitige Verbindung der Reifenbestandteile günstig auswirken kann.

Zur Vergleichmäßigung der Wärmeeinbringung in den Reifenrohling kann es vorteilhaft sein, den Reifen während der Wirksamkeit der Mikrowellenquelle oder der Mikrowellenquellen relativ zu diesen zu bewegen, insbesondere zu rotieren, aber es ist auch möglich, während des Einbringens von Mikrowellenenergie die Art und / oder den Ort der Einkopplung der Mikrowellenenergie zu variieren oder die Energiedichteverteilung durch optische Elemente zu beeinflussen und der jeweiligen Reifenkonfiguration anzupassen.

Nach einer weiteren Besonderheit der Erfindung werden in vorgebbaren Bereichen des Reifenrohlings mechanisch zumindest im wesentlichen neutrale, jedoch erhöhte Mikrowellen-Absorptionseigenschaften aufweisende Materialien aufgebracht. Auf diese Weise wird eine differenzierte Energieeinbringung in den Reifen auch dann gewährleistet, wenn die Mikrowelle selbst nicht differenziert gerichtet ist. Möglich ist es ferner, derartige Materialien, die speziell für die Wirksamkeit der Mikrowellenenergie im Reifenrohling von Bedeutung sind, in die Mischung bzw. in für bestimmte Reifenbereiche bestimmte Mischungen einzubringen und damit im Reifeninneren wirksam werden zu lassen.

Als Materialien für die bei erfindungsgemäßen Reifen vorgesehenen Wulstringe und Einlagen, insbesondere Gürteleinlagen, werden vorzugsweise Aramide, Kohlefasern, Nylon, Rayon und dergleichen verwendet, ohne daß eine Beschränkung auf diese Materialien gegeben ist.

Weitere vorteilhafte Merkmale der Erfindung sind in Unteransprüchen angegeben.

## Patentansprüche

1. Verfahren zur Herstellung von Fahrzeugluftreifen mit sich zwischen zwei Wulstringen erstreckender Karkasse und einem zwischen Karkasse und Lauffläche angeordneten Gürtel, bei welchem im Verlauf der unter Einwirkung von Wärme und Druck erfolgenden Vulkanisation und Formgebung zumindest ein Teil der erforderlichen Wärmeenergie in Form von Mikrowellenenergie in den in einer Preßform angeordneten Reifen eingebracht wird,
dadurch **gekennzeichnet,**
daß der Reifenrohling unter ausschließlicher Verwendung von nichtmetallischen Bestandteilen aufgebaut wird, und daß die Preßform aus unterschiedliche Mikrowellenabsorption und/oder Mikrowellendurchlässigkeit aufweisendem Material besteht, wobei die unterschiedlichen Materialbereiche der Preßform hinsichtlich des Aufbaus unterschiedlichen Reifenbereichen zugeordnet sind.

2. Verfahren nach Anspruch 1,
dadurch **gekennzeichnet,**
daß der Reifenrohling zunächst durch Mikrowellenenergie erwärmt wird, und daß die Mikrowellenerwärmung vor dem Einsetzen der Vulkanisationsreaktion abgebrochen wird und daß anschließend das Ausvulkanisieren sowie die Profilierung unter Druck und zusätzlicher Wärmezufuhr in der Preßform erfolgt.

3. Verfahren nach einem der vorhergehenden Ansprüche,
dadurch **gekennzeichnet,**
daß die Preßform zur Schaffung unterschiedlicher Absorptions- und/oder Durchlässigkeitsbereiche für die Mikrowellenenergie mit ein- oder mehrlagigen Schichten versehen wird.

4. Verfahren nach einem der vorhergehenden Ansprüche,
dadurch **gekennzeichnet,**
daß während der Zufuhr von Mikrowellenenergie die Leistung und/oder die Wellenlänge zumindest zeitweise variiert wird, und daß die Zufuhr der Mikrowellenenergie vorzugsweise intermittierend vorgenommen wird.

5. Verfahren nach einem der vorhergehenden Ansprüche,
dadurch **gekennzeichnet,**
daß während der Mikrowellenheizung gleichzeitig Mikrowellen unterschiedlicher Frequenz während vorgebbarer Zeitspannen wirksam sind.

6. Verfahren nach einem der vorhergehenden Ansprüche,
dadurch **gekennzeichnet,**
daß der Reifen während des Einbringens von Mikrowellenenergie relativ zu den entsprechenden Energiequellen bewegt, insbesondere rotiert wird.

7. Verfahren nach einem der vorhergehenden Ansprüche,
dadurch **gekennzeichnet,**
daß der Druck in der Preßform in Abhängigkeit von der Mikrowellenleistung variiert wird.

8. Verfahren nach einem der vorhergehenden Ansprüche,
dadurch **gekennzeichnet,**
daß in vorgebbaren Bereichen des Reifenrohlings mechanisch zumindest im wesentlichen neutrale, jedoch erhöhte Mikrowellen-Absorptionseigenschaften aufweisende Materialien eingebracht und/oder auf vorgebbare Bereiche des Reifenrohlings aufgebracht werden.

9. Verfahren nach einem der vorhergehenden Ansprüche,
dadurch **gekennzeichnet,**
daß während des Einbringens von Mikrowellenenergie in den Reifenrohling durch die Art und/oder den Ort der Einkopplung und/oder durch optische Elemente die Energiedichteverteilung der jeweiligen Reifenkonfiguration angepaßt wird.

10. Verfahren nach einem der vorhergehenden Ansprüche,
dadurch **gekennzeichnet,**
daß der Reifenrohling zur gleichmäßigen Erwärmung in eine ringförmige Hohlleiteranordnung eingebracht wird, die mehrere über den Umfang verteilt angeordnete Mikrowellen-Energieeinkopplungsstellen aufweist, wobei insbesondere in der zur Aufnahme des Reifenrohlings bestimmten Hohlleiteranordnung zur Vergleichmäßigung der Energieverteilung Mikrowellen-Reflektoren verwendet werden und vorzugsweise die Position und/oder Ausrichtung der Mikrowellen-Reflektoren während des Aufheizvorgangs verändert wird.

11. Verfahren nach einem der vorhergehenden Ansprüche,
dadurch **gekennzeichnet,**
daß als Material für die Wulstringe Kohlefasern, Aramide oder dergleichen und als Material für den Gürtel Aramide, Nylon, Rayon und dergleichen verwendet wird.

## Claims

1. A method of manufacturing pneumatic vehicle tyres, having a carcass extending between two bead rings and a breaker arranged between carcass and tread, wherein at least a part of the thermal energy required in the course of vulcanisation and shaping, which take place under the action of heat and pressure, is introduced into the tyre in the form of microwave energy, characterized in that the tyre blank is built up using exclusively non-metallic components, and in that the press mould consists of materials which have differential microwave absorption and/or microwave permeability, with the different material regions of the press mould being associated with tyre regions which differ with respect to their construction.

2. Method in accordance with claim 1, characterized in that the tyre blank is first heated by microwave energy, and in that the microwave heating is terminated before the onset of the vulcanisation reaction, and in that the full vulcanisation, and also the profiling, subsequently takes place under pressure and with the additional supply of heat in the press mould.

3. Method in accordance with one of the preceding claims, characterized in that the press mould is provided with single or multi-ply layers for the provision of regions of different absorption and/or permeability for the microwave energy.

4. Method in accordance with one of the preceding claims, characterized in that, during the supply of microwave energy, the power and/or the wave length is varied at least timewise, and in that the supply of microwave energy is preferably effected intermittently.

5. Method in accordance with one of the preceding claims, characterized in that, during microwave heating, microwaves of different frequency are simultaneously effective during predeterminable time intervals.

6. Method in accordance with one of the preceding claims, characterized in that the tyre is moved, and in particular rotated, relative to the corresponding energy sources, during the introduction of microwave energy.

7. Method in accordance with one of the preceding claims, characterized in that the pressure in the press mould is varied in dependence on the microwave power.

8. Method in accordance with one of the preceding claims, characterized in that materials which are mechanically at least substantially neutral, but have increased microwave absorption characteristics, are introduced into predeterminable regions of the tyre blank, and/or are applied onto predeterminable regions of the tyre blank.

9. Method in accordance with one of the preceding claims, characterized in that, during the introduction of microwave energy into the tyre blank, the energy density distribution is matched to the respective tyre configuration through the manner and/or the location of the coupling-in of energy and/or through optical elements.

10. Method in accordance with one of the preceding claims, characterized in that the tyre blank is introduced for uniform heating into an annular wave-guide arrangement which has several coupling-in locations for microwave energy arranged distributed over the periphery, with microwave reflectors being used, in particular in the waveguide arrangement intended to receive the tyre blank, in order to smooth out the energy distribution, and with the position and/or the alignment of the microwave reflectors preferably being changed during the heating process.

11. Method in accordance with one of the preceding claims, characterized in that carbon fibres, aramides or the like are used as the material for the bead rings, and in that aramide, nylon, rayon and the like are used as the material for the breaker.

## Revendications

1. Procédé de fabrication de bandages pneumatiques pour véhicules automobiles, comportant une carcasse s'étendant entre deux bourrelets et une ceinture disposée entre carcasse et bande de roulement, dans lequel, au cours de la vulcanisation et du façonnage, effectués sous l'influence de la chaleur et d'une pression, au moins une partie de l'énergie thermique nécessaire est introduite sous la forme d'énergie hyperfréquence dans le pneu disposé dans une matrice,
caractérisé en ce que l'ébauche de pneu est élaborée en utilisant exclusivement des éléments constitutifs non métalliques, et en ce que la matrice consiste en un matériau présentant une absorption hyperfréquence et/ou une transmissibilité hyperfréquence différente(s), les zones différentes du matériau de la matrice étant associées, en ce qui concerne la structure, à des zones différentes du pneu.

2. Procédé selon la revendication 1,
caractérisé en ce que l'ébauche de pneu est d'abord préchauffée par de l'énergie hyperfréquence, et en ce que le chauffage hyperfréquence est interrompu avant le commencement de la réaction de vulcanisation, et en ce que, ensuite, la vulcanisation complète ainsi que le profilage s'effectuent sous pression et avec une amenée supplémentaire de chaleur dans la matrice.

3. Procédé selon l'une des revendications précédentes,
caractérisé en ce que, pour l'obtention de zones d'absorption et/ou de transmissibilité différentes pour l'énergie hyperfréquence, la matrice est pourvue de revêtements monocouches ou multicouches.

4. Procédé selon l'une des revendications précédentes,
caractérisé en ce que, pendant l'amenée d'énergie hyperfréquence, la puissance et/ou la longueur d'onde sont modifiées du moins par moments, et en ce que l'amenée de l'énergie hyperfréquence est effectuée, de préférence, de façon intermittente.

5. Procédé selon l'une des revendications précédentes,
caractérisé en ce que, pendant le chauffage hyperfréquence, des ondes ultra-courtes de fréquences différentes agissent simultanément pendant des laps de temps prédéfinissables.

6. Procédé selon l'une des revendications précédentes,
caractérisé en ce que, pendant l'introduction d'énergie hyperfréquence, le pneu est déplacé par rapport aux sources d'énergie correspondantes, et il est notamment entraîné en rotation.

7. Procédé selon l'une des revendications précédentes,
caractérisé en ce que la pression à l'intérieur de la matrice est modifiée en fonction de la puissance hyperfréquence.

8. Procédé selon l'une des revendications précédentes,
caractérisé en ce que des matières, au moins globalement neutres mais présentant toutefois des propriétés augmentées d'absorption hyperfréquence sont mises en place, de manière mécanique, dans des zones prédéfinissables de l'ébauche de pneu et/ou sont appliquées sur des zones prédéfinissables de l'ébauche de pneu.

9. Procédé selon l'une des revendications précédentes,
caractérisé en ce que, pendant l'introduction d'énergie hyperfréquence dans l'ébauche de pneu, la répartition de la densité d'énergie est adaptée, par le mode et/ou l'endroit de l'alimentation et/ou par des éléments optiques, à la configuration correspondante du pneu.

10. Procédé selon l'une des revendications précédentes,
caractérisé en ce que l'ébauche de pneu est introduite, pour un chauffage régulier, dans un agencement annulaire de guides d'ondes, qui présente plusieurs emplacements d'alimentation en énergie hyperfréquence répartis sur la périphérie, dans lequel, particulièrement dans l'agencement déterminé de guides d'ondes destiné à recevoir l'ébauche de pneu, on utilise des réflecteurs hyperfréquence pour l'égalisation de la répartition d'énergie et, de préférence, la position et/ou l'orientation des réflecteurs hyperfréquence est ou sont modifiée(s) au cours de l'opération de chauffage.

11. Procédé selon l'une des revendications précédentes,
caractérisé en ce que, en tant que matière pour les bourrelets, on utilise des fibres de carbone, de l'aramide ou analogues et, en tant que matière pour la ceinture, de l'aramide, du Nylon, de la rayonne ou analogues.
